Europäisches Patentamt

European Patent Office

Office européen des brevets

(19)

(11) EP 0 642 907 B2

(12) NEUE EUROPÄISCHE PATENTSCHRIFT

(45) Veröffentlichungstag und Bekanntmachung des Hinweises auf die Entscheidung über den Einspruch:
27.11.2002 Patentblatt 2002/48

(45) Hinweis auf die Patenterteilung:
14.05.1997 Patentblatt 1997/20

(21) Anmeldenummer: 94111459.7

(22) Anmeldetag: 22.07.1994

(51) Int Cl.⁷: **B29C 44/50**, B01J 20/26,
C09K 3/32, C08J 9/00

(54) **Formgebilde aus einem thermoplastischen Kunststoff, Verfahren zu seiner Herstellung sowie seine Verwendung**

Thermoplastic structure, method of making and use

Structure thermoplastique, procédé de production et utilisation

(84) Benannte Vertragsstaaten:
AT BE CH DE DK FR GB GR IE IT LI LU NL PT SE

(30) Priorität: 02.08.1993  DE 4325879

(43) Veröffentlichungstag der Anmeldung:
15.03.1995  Patentblatt 1995/11

(73) Patentinhaber: Depron B.V.
6002 SM Weert (NL)

(72) Erfinder:
• Vonken, Hub A. G.
  NL-6004 XZ Weert (NL)
• Muntendam, Hendrik-Jan
  NL-2585 JL Den Haag (NL)
• van der Hoeven, Jos
  NL-6085 CM Horn (NL)
• Piqué, Udo
  D-65812 Bad Soden-Neuenhain (DE)

(74) Vertreter: Zounek, Nikolai, Dipl.-Ing. et al
Patentanwaltskanzlei Zounek
Industriepark Kalle-Albert
Gebäude H391
Rheingaustrasse 190
65174 Wiesbaden (DE)

(56) Entgegenhaltungen:
EP-A- 0 078 108          EP-A- 0 090 507
WO-A-90/14159            DE-A- 1 942 216
DE-A- 1 942 218          GB-A- 1 345 975
US-A- 4 183 984          US-A- 4 232 130
US-A- 4 279 848          US-A- 4 384 032
US-A- 4 563 483          US-A- 5 116 881

• N.C. Hilyard "Mechanics of cellular plastics", Applied Science Publishers Ltd., 1982, Seiten 6-7
• Klempner & Fritsch "Handbook of polymeric foams and foam technology", Carl Hanser Verlag, München, 1991, Seiten 1, 5-10, 13-15, 22-24, 28, 29, 37, 155, 156, 159, 216, 218-220

**Beschreibung**

Die Erfindung betrifft ein Formgebilde aus einem thermoplastischen Kunststoffschaum, dessen eine Oberfläche geschlossen und dessen andere Oberfläche zumindest in einem Teilbereich geöffnet ist, ein Verfahren zur Herstellung eines solchen Formgebildes sowie die Verwendung des Formgebildes.

Bei dem Formgebilde handelt es sich um eine offenzellige Kunststoffschaumfolie, die, im Gegensatz zu einer Kunststoffschaumfolie mit geschlossenen Zellen, in der Lage ist, Flüssigkeiten aufzunehmen.

Kunststoffschaumfolien sind schon seit langem bekannt, insbesondere haben Polystyrolschaumfolien ein breites Anwendungsspektrum gefunden. See werden beispielsweise als Verpackungsschalen, im Bausektor vor allem als Isoliermaterial, beispielsweise als Untertapeten, verwendet.

Kunststoffschaumfolien werden im allgemeinen in der Weise hergestellt, daß ein thermoplastischer Kunststoff zusammen mit einem Treibmittel, insbesondere einem Treibgas, aus einer ring- oder breitschlitzförmigen oder Koextrusions-Düse extrudiert wird. Kurz nach dem Verlassen der Extrusionsdüse expandiert das im Kunststoff fein verteilte Treibmittel, so daß sich im Kunststoffschaumkörper feinste Bläschen bilden. Je nach Verfahrensbedingungen hinsichtlich der Temperatur und der Extrusionsgeschwindigkeit werden mehr oder weniger grobe Bläschen erhalten. Dementsprechend enthält die so hergestellte Kunststoffschaumfolie dicht gepackte, geschlossene, gasgefüllte Zellen, wobei das in den Zellen eingeschlossene Gas im allgemeinen Luft und/oder Reste des Treibmittels sind. Die ausgezeichneten Isoliereigenschaften der Kunststoffschaumfolien beruhen im wesentlichen auf den dicht gepackten, geschlossenen, gasgefüllten Zellen, die gewissermaßen eine "immobile" Gas-, insbesondere Luft-Schicht bilden. Eine solche feststehende Luftschicht besitzt eine geringe Wärmeleitfähigkeit.

Völlig anders verhält sich eine Kunststoffschaumfolie, in der die Zellen nicht geschlossen, sondern geöffnet, d.h. durchgängig, sind. Eine solche Kunststoffschaumfolie kann beispielsweise Flüssigkeiten speichern, ähnlich wie ein Schwamm. Bei solchen offenzelligen Schaumstoffen stehen die Zellen untereinander über die Gasphase in Verbindung. Sie bestehen im Extremfall nur noch aus Zellstegen.

In dem Dokument WO 90/14159 ist ein Ölaufsaugmaterial beschrieben, das aus zerkleinertem Polyethylenschaum besteht, ein Hinweis darauf, wie eine intakte saugfähige Kunststoffschaumfolie zu erhalten ist, kann diesem Dokument nicht entnommen werden. Durch Ausübung von mechanischem Druck auf die Kunststoffschaumfolie kann ein Großteil der zuvor geschlossenen Zellen des Polyethylenschaums geöffnet werden. Dabei werden jedoch die mechanische Festigkeit und die Stabilität der Kunststoffschaumfolie deutlich herabgesetzt, da die Zellenwände zum Teil durch den mechanischen Druck deformiert werden. Eine solche Folie kann einen Anteil an geöffneten Zellen von mehr als 50 % besitzen.

In der US-A-5 116 881 ist ein Verfahren zur Herstellung eines Polypropylenschaumes beschrieben, der eine gleichförmige Zellstruktur mit einem Anteil an offenen Zellen von kleiner als 40 Vol.% und geschlossene Oberflächen aufweist. Bei den offenen Zellen handelt es sich um zerplatzte bzw. zerbrochene Zellen, die keine intakten Zellenwände haben. Das zweistufige Extrusionsverfahren erfolgt in der Weise, daß in einem ersten Extrusionsschritt Polypropylengranulat und ein Nukleierungsmittel einem ersten Extruder eingespeist und aufgeschmolzen werden. In eine der beheizten Zonen des ersten Extruders wird dann noch ein Treibmittel in die Polypropylenschmelze eingebracht. Danach wird die Temperatur der Polypropylenschmelze in einem zweiten Extruder zonenweise geringfügig abgesenkt und die Schmelze danach extrudiert.

Die GB-A-1 345 975 offenbart ein Verfahren zur Herstellung von Kunststoffschäumen mit offenen Zellen, die nicht durch Zellenwände voneinander getrennt sind. Mit steigender Extrusionstemperatur in dem einstufigen Extrusionsverfahren steigt der Anteil an offenen Zellen und bei einer Temperatur von 115 °C kollabiert der Kunststoffschaum, so daß die gesamte Zellstruktur zusammenbricht.

In der US-A-4 384 032 ist ein flüssigkeitsdurchlässiger Schaum offenbart, der eine offenzellige Zellstruktur besitzt. Der Zusatz eines Polymers mit geringer Verträglichkeit gegenüber dem Polyolefin beeinflußt das Zerplatzen der Zellen im Schaum, was zu Windungen, mäanderförmigen Durchgängen und Sackgassen im Schaum führt. Eine regelmäßige Raumstruktur mit aneinandergrenzenden polyederähnlichen Zellen ist nicht vorhanden.

Aus der EP-A - 0 090 507 ist eine schalenförmige Verpackung für "Fast Food" bekannt, die aus einer offenzelligen geschäumten Polymerschicht und einer geschlossenzelligen polymeren Außenschicht als Flüssigkeitsbarriereschicht besteht. Als Polymer für beide Schichten findet beispielsweise Polystyrol Verwendung. Die Ausbildung der offenzelligen Kunststoffschaumfolie erfolgt dabei in der gleichen Weise wie die Extrusion der geschlossenzelligen Außenschicht, mit der einen Ausnahme, daß ein Überschuß an Nukleierungsmittel, wie beispielsweise Natriumbicarbonat und Citronensäure, in einem Gewichtsverhältnis von 0,8 bis 1,2 und 1,2 bis 0,8 zugesetzt, jedoch auf den Einsatz eines Treibmittels verzichtet wird. Da kein Treibmittel verwendet wird, ist nur eine einzige. Mischkammer und eine einzelne Extrusionsschnecke erforderlich. Bei diesem bekannten Verfahren wird eine offenzellige Polystyrolschaumschicht mit einem mittleren Anteil an offenen Zellen von 50 bis 90 Vol.% erhalten. Bei diesem bekannten Verfahren wird jedoch keine Zellenstruktur erhalten, bei der die einzelnen Zellen untereinander in Verbindung stehen, vielmehr gilt, daß nur die Zellen in der Oberfläche der Kunststoffschaumfolie mit den darunter liegenden, benachbarten Zellen in Verbindung stehen, wobei jedoch keine Zellenstruktur erhalten wird, bei der die Zellen unmittelbar aneinander angrenzen und nur durch die Zellenwände voneinander getrennt sind.

Aus der JP-Patentschrift 3-57348 ist ein feuchtigkeitsabsorbierendes Verpackungsmaterial aus einem Formkörper bekannt, der aus einer homogenen Mischung von 50 bis 85 Gew.% Ethylenpolymer und 15 bis 50 Gew.% eines Adsorbens besteht, das bei Wasseraufnahme nicht anschwellt.

In der JP-Patentschrift 54-31026 ist ein Verfahren zur Herstellung eines Polypropylenschaumes mit offenzelliger Struktur beschrieben, bei dem Homopolymere oder Copolymere des Propylens unter Druck und Hitze geliert werden, unter Zusatz von Fluorchlor-Kohlenwasserstoffen als Treib- bzw. Aufschäummitiel und eines herkömmlichen Nukleierungsmittels. Der extrudierte Polypropylenschaum hat eine gleichförmige und feine Zellenstruktur mit einem mittleren Zellendurchmesser von 0,5 mm und eine Dichte von etwa 0,028 g/cm$^3$. Das Absorptionsvermögen des Polypropylenschaumes für Wasser beträgt das 3- bis 7,6-fache der Schaumdichte.

Aufgabe der Erfindung ist es, ein Formgebilde aus einem Kunststoffschaum, mit einer offenzelligen Zellenstruktur, die in weiten Bereichen variierbar ist, zur Verfügung zu stellen, wobei die Zellen miteinander in Verbindung stehen und die im Inneren des Formgebildes liegenden Zellen ohne mechanische Zerstörung von Zellenwänden für Medien durchgängig sind und Flüssigkeit speichern.

Die Lösung der Aufgabe ergibt sich durch ein Formgebilde der eingangs beschriebenen Art in der Weise, daß die an diese Oberfläche angrenzenden Zellen für Flüssigkeiten zugänglich sind, wobei der Kunststoffschaum im Inneren zumindest 10 Vol.% offene Zellen enthält, die Zellen eine polyederähnliche Gestalt besitzen, in einer Raummatrix aneinandergrenzen und Zellenwände aufweisen, die mit Öffnungen versehen sind, ansonsten keinerlei mechanische Deformationen aufweisen und zumindest zwei Zellenwände jeder offenen Zelle mit solchen Öffnungen ausgestattet sind, unter Beibehaltung der mechanischen Festigkeit der Raummalrix.

In Ausgestaltung der Erfindung ist das Formgebilde ein thermoplastischer Schaum zumindest eines Kunststoffes aus der Gruppe der Polyolefine, wie Polyethylen (HDPE, LDPE, LLDPE), chloriertes Polyethylen, Polypropylen (PP), PoLypropylencopolymere (PPC), Ethylenvinylacetatcopolymer (EVA), halogenierte Polyolefine; aus der Gruppe der Styrolpolymere, wie Polystyrol (PS), Polystyrolcopolymere (PSC), Acrylonitrilbutadien-styrolcopolymere (ABS), Styrolmaleinsäureanhydrid, schlagfeste Polystyrole (SPS); aus der Gruppe der Polyester, wie Polyalkylenterephthalat; aus Ethylenpropylenterpolymerisat, Polyvinylchlorid (PVC), und/oder Polyphenylenoxid.

Zweckmäßigerweise besteht der Kunststoffschaum aus thermoplastischen Polymeren oder Blends thermoplastischer Polymeren (einschließlich von Copolymeren) oder Blends thermoplastischer und nicht-thermoplastischer Polymeren.

In weiterer Ausgestaltung sind die Ausgangsstoffe des Kunststoffschaums zumindest ein Polymer als Basispolymer und ein Treibgas und/oder ein Nukleierungsmittel. Das Nukleierungsmittel kann auch als Treibgas und umgekehrt das Treibgas als Nukleierungsmittel dienen. Es sind zumindest ein Basispolymer und Treibgas erforderlich, wozu bei Bedarf ein Zellenstruktur-Regler hinzukommt. Insbesondere handelt es sich bei dem Basispolymer um Polystyrol mit bis zu 95 Gew.%, bei dem Nukleierungsmittel um Talkum, Kreide, Natriumcarbonat, Natriumbicarbonat und/oder Citronensäure, mit bis zu 3 Gew.%, und bei dem Treibmittel um Butan, Propan, $CO_2$ oder Mischungen hiervon mit bis zu 6 Gew.%. Die Gewichtsanteile der einzelnen Bestandteile hängen im einzelnen von dem verwendeten Extrudertyp ab.

In Weiterbildung der Erfindung ist ein bestimmter Gewichtsanteil des Basispolymers durch ein Fremd-Polymer mit einem Gewichtsanteil in der gleichen Größenordnung ersetzt.

Die weitere Ausgestaltung des Formgebildes ergibt sich aus den Merkmalen der Ansprüche 7 bis 15.

Durch Verändern der Gewichtsanteile der Ausgangsstoffe der Kunststoffschaumfolie kann der Anteil der offenzelligen Struktur in weiten Bereichen variiert werden. Durch die Nachbehandlung wird eine Folie an der nachbehandelten Seite stärker offenzellig als an der unbehandelten Seite. Mit der Erfindung wird der Vorteil erzielt, daß die Kunststoff-Hartschaumfolie, selbst wenn der Anteil an offenzelliger Struktur mindestens 50 Vol.% beträgt, sich in ihren mechanischen Eigenschaften, wie Reißfestigkeit, E-Modul gegenüber den gleichen Eigenschaften einer gleichartigen Kunststoffschaumfolie mit überwiegend geschlossenzelliger Struktur so gut wie nicht unterscheidet. Dies ist darauf zurückzuführen, daß die Zellen der Kunststoffschaumfolie zwar geöffnet sind, jedoch das eigentliche Zellengerüst erhalten bleibt und weder mechanisch noch thermisch verformt bzw. zerstört ist.

Unter dem Begriff "Zellen" sind die in der Kunststoffschaumfolie enthaltenen Hohlräume zu verstehen. Geschlossen sind diese Zellen dann, wenn die den Hohlraum umschließenden Zellenwände aus nicht-perforiertem oder in sonstiger Weise für ein Medium undurchlässigem Kunststoff bestehen. Von offenen Zellen ist dann die Rede, wenn mindestens zwei der den Hohlraum umschließenden Zellenwände Öffnungen aufweisen, so daß zwischen benachbarten Zellen ein Stoffaustausch, insbesondere ein Austausch von flüssigen Medien, möglich ist.

Die Anzahl der geschlossenen bzw. offenen Zellen kann gemäß genormter Verfahren zum Bestimmen des Volumenanteils offener und geschlossener Zellen in harten Schaumstoffen festgestellt werden (z.B gemäß DIN-Norm 4590). Die Angabe von Vol.% für offene Zellen bezieht sich dann jeweils auf das gesamte Volumen einer repräsentativen Volumeneinheit.

Im Rahmen der Aufgabe soll auch ein Verfahren zur Herstellung von Formgebilden aus einem thermoplastischen Kunststoffschaum zur Verfügung gestellt werden, das gegenüber dem herkömmlichen Extrusionsverfahren für Kunststoffschaumfolien mit geschlossener Zellenstruktur nur geringfügige Modifikationen der Verfahrensschritte aufweist. Dies wird durch die Verfahrensmaßnahmen gemäß den Merkmalen des Patentanspruchs 16 gelöst.

Bei diesen Kunststoffschäumen handelt es sich um Polymere, die in einem großen Temperaturbereich zu stabilen Schäumen extrudierbar sind, nämlich um amorphe Polymere, wie Polystyrol. Bei kristallinen Polymeren wird die Temperatur auf $\pm$ 2 °C um die Kristallisationstemperaur herum eingestellt. Dabei wird die Offenzelligkeit durch entsprechendes Einstellen der Produktionsvariablen, wie Düsendruck der Extrusionsdüse, Treibgasanteil und Zellgröße, erreicht.

In einer Variante des Verfahrens wird ein bestimmter Gewichtsanteil des Polymers durch einen Gewichtsanteil in der gleichen Größenordnung eines Fremd-Polymers ersetzt und ist die Benetzbarkeit des Fremd-Polymers in der Polymerschmelze nahezu Null.

Die weitere verfahrensmäßige Ausgestaltung der Erfindung ergibt sich aus den Verfahrensmaßnahmen der Ansprüche 18 bis 27.

Das so hergestellte Formgebilde findet Verwendung als Verpackungsmaterial für Feuchtigkeit enthaltendes Gut, als Saugfilter, wobei diese Aufzählung der Verwendungsmöglichkeiten keineswegs vollständig, sondern nur beispielhaft ist.

In Abhängigkeit von dem Temperaturgradienten bei der Extrusion der Kunststoffschaumfolien befinden sich die offenen Zellen mehr oder weniger weit im Inneren der Schaumfolie, bei geschlossener Oberfläche. Durch die Nachbehandlung wird dann die Offenzelligkeit zu einer der Oberflächen der Folie hin erzielt.

Die Erfindung wird im folgenden anhand der Zeichnungen näher erläutert. Es zeigen:

Fig. 1a in schematischer Schnittansicht Kunststoffschaumfolien mit offener Zellenstruktur, bei der die Zellen durch mechanischen Druck geöffnet werden,

Fig. 1b in schematischer Schnittansicht Kunststoffschaumfolien mit offener Zellenstruktur nach der Erfindung,

Fig. 2 eine perspektivische Ansicht einer Tandem-Extrusionsanlage zur Herstellung von offenzelligen Kunststoffschaumfolien nach der Erfindung,

Fig. 3 im Diagramm den Zusammenhang zwischen der Temperatur der Kunststoffschmelze aus Polystyrol beim Austritt aus einer Extrusionsdüse und der Ausbildung von offen- und geschlossenzelliger Struktur der Kunststoffschaumfolie,

Fig. 4 im Diagramm den Zusammenhang zwischen der Temperatur von Kunststoffschmelzen verschiedener Kunststoffe beim Austritt aus einer Extrusionsdüse und der Ausbildung offen- und geschlossenzelliger Struktur der Kunststoffschaumfolien,

Fig. 5a und 5b schematisch die Anordnung von Fremd-Polymerpartikeln in der Zellenstruktur bzw. in einer Zellenwand einer Kunststoffschaumfolie, und

Fig. 6 schematische Schnittdarstellungen im vergrößerten Detail von Zellenstrukturen von Kunststoffschaumfolien und deren Flüssigkeitsabsorptionsverhalten.

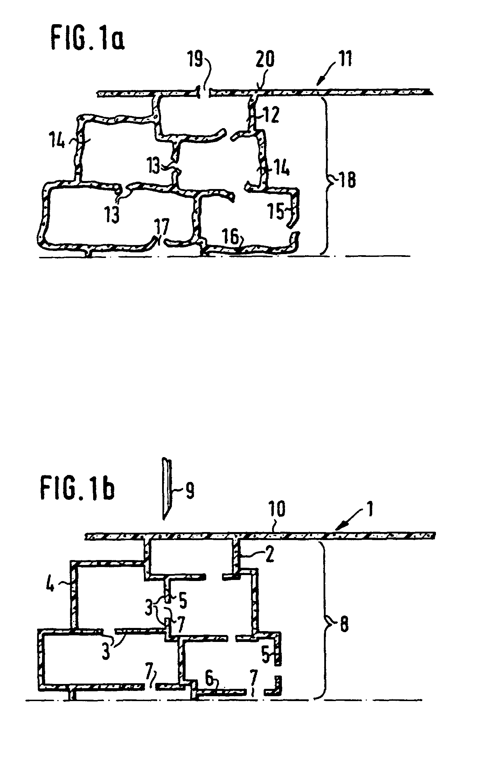

In Figur 1a ist ein schematischer Schnitt durch ein Formgebilde 11 dargestellt, das durch Extrusion einer Kunststoffschmelze nach dem Stand der Technik und nachfolgender mechanischer Druckbelastung der extrudierten Kunststoffschaumfolie erhalten wird. Beim Verschäumen eines Thermoplastes, wie Polystyrol, entsteht bei den bisher bekannten Verfahren eine Folie mit einer geschlossenen Zellenstruktur. Polystyrol kann über den Extrusionsprozeß zu verschiedenen Schaumprodukten mit geschlossener Zellenstruktur verarbeitet werden. Hierbei werden unterschiedliche Treibmittel und Nukleierungsmittel eingesetzt, um erwünschte Produkteigenschaften zu erzielen. Die Zellengröße, Dichte und Struktur des Kunststoffschaumes sowie der Erhalt der Offenzelligkert sind mit physikalischen Variablen und Additiven nach Bedarf zu variieren. Der zu erstellende Kunststoffschaum mit geschlossener Zellenstruktur findet seine Anwendung in unterschiedlichen Gebieten, wobei von spezifischen Eigenschaften, wie geringer Dichte, Isoliervermögen, Verformungsfähigkeit, Gebrauch gemacht wird. Durch die mechanische Druckbelastung einer Oberfläche 20 des Formgebildes 11 werden die zunächst geschlossenen Zellen 12, die unmittelbar an die Oberfläche 20 angrenzen, sowie die darunterliegenden Zellen 14 mechanisch aufgebrochen, so daß sich Öffnungen 17 in den Zellenwänden 15 und 16 bilden. Dabei werden Stege 13 der Zellenwände mechanisch soweit verformt, daß die einzelnen Zellen sowie die Raummatrix 18 des Formgebildes ihre mechanischen Festigkeiten verlieren. Dies kann dazu führen, daß die oberen Schichten des Formgebildes 11 aus einem starren Schaum kollabieren und somit die Kunststoffschaumfolie weich wird. Die voranstehenden Ausführungen gelten auch für weiche Schäume aus Polyethylen und daraus abgeleiteten Schäumen.

In Figur 1b ist ein Formgebilde 1 nach der Erfindung aus einem thermoplastischen Kunststoff gezeigt, bei dem Zellen 2 und 4 polyederähnliche Gestalt mit einer maximalen Abmessung ≤1,0 mm, insbesondere ≤0,4 mm, besitzen und aneinander angrenzen. Eine Oberfläche 10 des Formgebildes 1 ist anfänglich geschlossen, wird jedoch durch mechanisches Bearbeiten, wie Abschaben, Ritzen, Perforieren oder durch Abkühlen und gleichzeitiges Dehnen während der Extrusion geöffnet. Beim Perforieren handelt es sich um ein sogenanntes Nadeln der Oberfläche 10 mit einem nadelförmigen Werkzeug 9. Die Zellen 2 und 4 bilden eine Raummatrix 8 oder ein Zellengerüst und sind gestaltsmäßig unversehrt, d.h. Zellenwände 5 und 6, die mit Öffnungen 7 versehen sind, weisen keinerlei mechanische Deformationen auf. Jeweils zwei Wände 5, 6 jeder offenen Zelle 4 besitzen derartige Öffnungen 7. Zu beiden Seiten jeder Öffnung 7 befinden sich Stege 3, die im Vergleich zu dem Formgebilde 11 in Figur 1a nicht verformt sind. Mit der Bezugszahl 2 sind die unmittelbar an die Oberfläche 10 anschließenden Zellen bezeichnet, während die darunterliegenden Zellen mit der Bezugszahl 4 belegt sind.

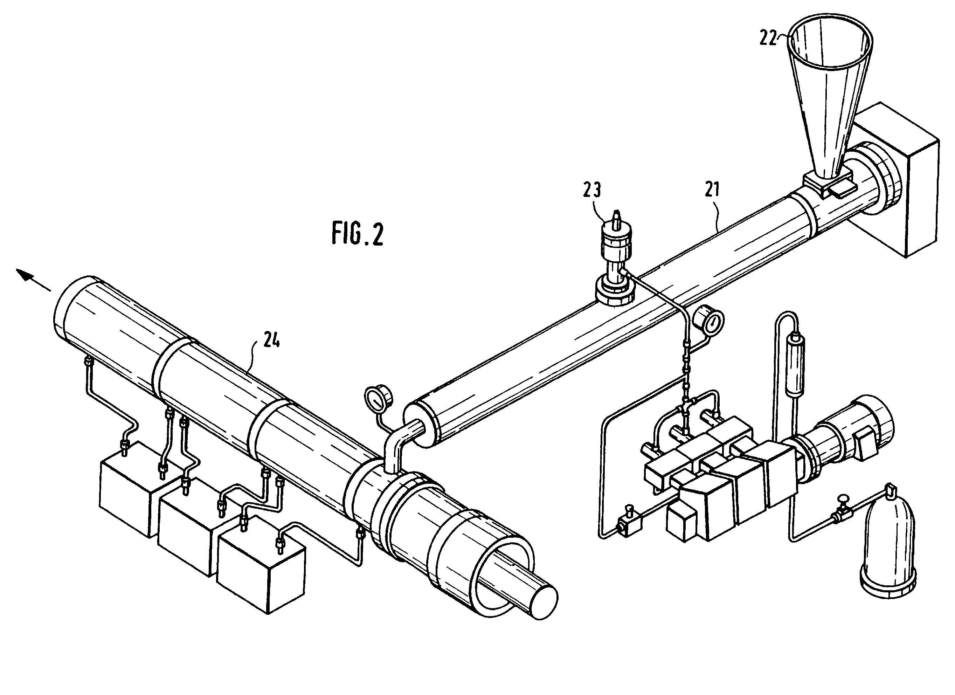

In Figur 2 ist beispielsweise perspektivisch eine Extrusionsanlage zur Herstellung des erfindungsgemäßen Formgebildes 1 dargestellt, wobei sich diese Anlage nicht von einer herkömmlichen Anlage zur Herstellung von geschlossenzelligen Kunststoffschäumen unterscheidet. Ein erster Extruder 21 wird über einen Einfülltrichter 22 mit einem Kunststoffgranulat, vermischt mit einem Nukleierungsmittel, beschickt. In dem Schneckenextruder wird die Mischung aus Kunststoffgranulat und Nukleierungsmittel homogen gemischt und, je nach der Art des Kunststoffgranulats, durch Erhitzen auf eine Temperatur bis zu 300 °C die Mischung aufgeschmolzen. Die Kunststoffschmelze wird im ersten Extruder 21 mit einem Treibmittel über einen Treibmittel-Injektor 23 mit hohem Druck von bis zu 350 bar beaufschlagt. Dieses Treibmittel wird homogen mit der Kunststoffschmelze vermischt und einem zweiten Extruder 24 zugeleitet, in welchem die Kunststoffschmelze auf eine Massetemperatur im Bereich der Untergrenze des pseudoplastischen viskosen Temperaturbereiches, z.B. von 120 bis 250 °C vor der Extrusion abgekühlt wird. Diese Massetemperatur wird auf die Temperatur abgesenkt, die bei der Extrusion von Kunststoffschmelzen zu geschlossenzelligen Kunststoffschäumen benötigt wird. Beispielsweise beträgt die Massetemperatur einer Kunststoffschmelze, deren Basispolymer Polystyrol ist, etwa 170 °C, während üblicherweise die Massetemperatur von Polystyrol beim Austritt an der Extrusionsdüse bei etwa 150 °C liegt. Die Temperatur ist eine der Lenkungsvariablen. Daneben kann auch mit Variablen, wie Dichte, Zellengröße und Düsendruck, gearbeitet werden.

Bei der Herstellung von geschlossenzelligen Kunststoffschäumen entfaltet der Druck des Treibmittels bzw. Treibgases bei etwa 150 °C während des Austritts aus der Extrusionsdüse die Wirkung, daß die Kunststoffschmelze durch Abkühlung vom plastischen in den annähernd elastischen Zustand übergeführt wird. An der Extrusionsdüse tritt dabei eine rasche Verdampfung und Aufschäumung des Treibmittels und ein Temperaturverlust von etwa 20 °C ein. Danach kühlt der extrudierte Kunststoffschaum langsam weiter ab.

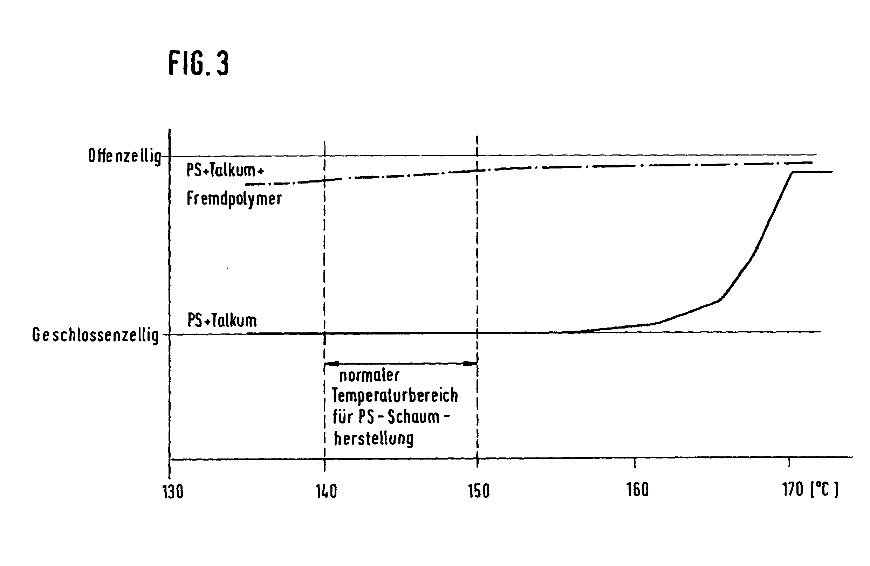

In Fig. 3 ist im Diagramm die Ausbildung von geschlossenzelliger und offenzelliger Struktur in einem Polystyrolschaum dargestellt, in Abhängigkeit von der Temperatur der Kunststoffschmelze an der ringförmigen Extrusionsdüse. Wie die untere Kurve erkennen läßt, sind die Zellen des Polystyrolschaumes bis zu einer Temperatur von etwa 155 °C weitgehend geschlossen. Bei weiter ansteigenden Temperaturen der Polystyrolschmelze am Austritt der ringförmigen Extrusionsdüse beginnen sich Zellen des Polystyrolschaumes zu öffnen, und bei etwa 170 °C Austrittstemperatur der Polystyrolschmelze sind die Zellen zum größten Teil geöffnet. Der übliche Temperaturbereich zur Herstellung von geschlossenzelligen Polystyrolschäumen liegt im Bereich von 140 bis 150 °C. Dem Basispolymer Polystyrol ist hierbei als Nukleierungsmittel Talkum beigefügt. Die obere Kurve im Diagramm 3 zeigt Polystyrolschaum, der weitgehend eine offenzellige Struktur über einen Temperaturbereich von 135 °C bis 170 °C Ausgangstemperatur der Polystyrolschmelze an der ringförmigen Extrusionsdüse besitzt. Die Ausgangsstoffe dieses Polystyrolschaumes sind Polystyrolgranulat, Talkum als Nukleierungsmittel und ein Fremd-Polymer. Aus dem Diagramm läßt sich ablesen, daß eine offenzellige Struktur des Polystyrolschaumes entweder durch entsprechende Erhöhung der Austrittstemperatur der Polystyrolschmelze an der ringförmigen Extrusionsdüse erzielen läßt oder durch Zugabe eines Fremd-Polymers zu der Standardrezeptur des Polystyrolschaumes im üblichen Temperaturbereich von 140 bis 150 °C, insbesondere 150 °C.

Für die höhere Temperatur zum Erzielen eines offenzelligen Polymerschaumes gilt allgemein, daß die Temperatur 10 bis 20 % höher liegen muß als die Temperatur beim Extrudieren von geschlossenzelligen Polymerschäumen. Durch die höhere Temperatur an der Extrusionsdüse, bei sonst gleichen Bedingungen und Rezepturen wie bei der Herstellung von geschlossenzelligen Kunststoffschäumen, führt das in den Zellen eingeschlossene Treibmittel zu einem gleichmäßigen Öffnen der weichen Zellenwände, und in der Abkühlungsphase außerhalb der Extrusionsdüse überzieht dann eine Haut die Kunststoffschaumfolie. Wird die Oberfläche dieser Kunststoffschaumfolie abgeschabt, geritzt oder genadelt, d.h. mechanisch perforiert, so wird die offenzellige Struktur freigelegt, die zur Aufnahme von apolarer Flüssigkeit, d.h. ölähnlichen Flüssigkeiten, geeignet ist. Die Öffnung der Oberfläche wird ebenso durch Abkühlen und gleichzeitige Dehnung des extrudierten Kunststoffschaumgebildes erhalten.

Durch die höhere Temperatureinstellung sinkt die Viskosität, und es öffnen sich die Zellenwände durch den erhöhten Gasdruck, ohne Aufplatzen und ohne Deformationen, wodurch der Effekt der offenzelligen Struktur herbeigeführt wird. Auch wenn sich an der Oberfläche durch die weitere Abkühlung die Zellen schließen und erst durch eine mechanische Behandlung geöffnet werden müssen, kommt es im Inneren der Kunststoffschaumfolie nicht zu einem Verschließen der Zellen, d.h. diese bleiben weiterhin offen.

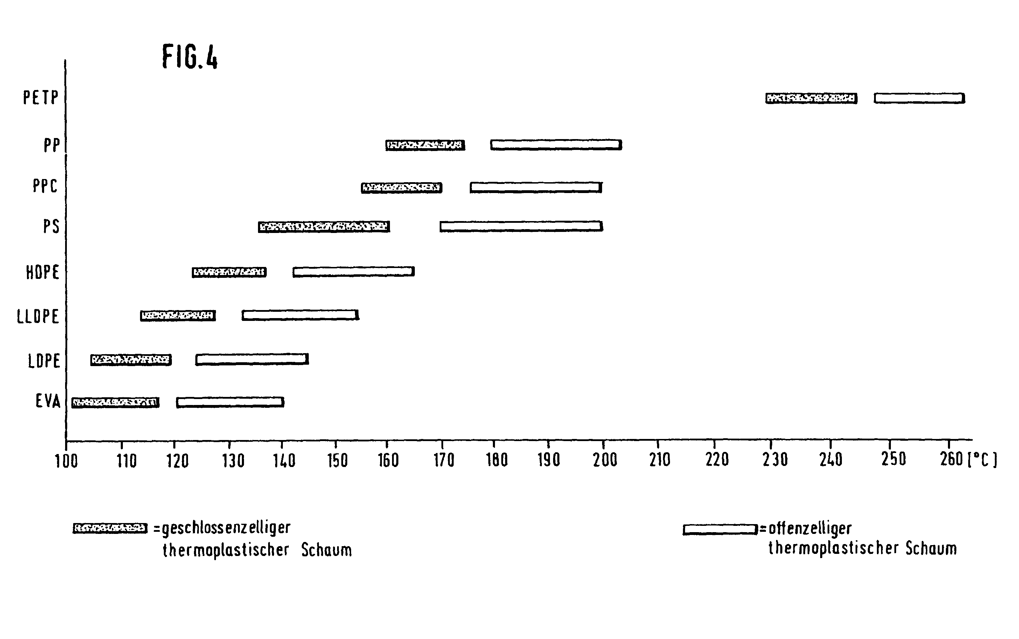

Im Diagramm der Figur 4 sind für verschiedene amorphe Polymere die Temperaturbereiche der jeweiligen Polymerschmelze in einer bzw. am Austritt einer Extrusionsdüse in °C angegeben. Die schraffierten Temperaturbereiche für das jeweilige Polymer sind geeignet zum Erzielen von geschlossenen Zellenstrukturen, während die unschraffierten, höheren Temperaturbereiche des betreffenden Polymers bei der Herstellung zu offenzelligen Strukturen führen. Bei kristallinen Polymeren muß die Massetemperatur dicht um die Kristallisationstemperatur herum liegen (± 2 °C), um den Schaum extrudieren zu können. Sowohl für die schraffierten als auch für die unschraffierten Temperaturbereiche amorpher Polymere gilt, daß für die niedrigste Temperatur jedes Bereiches die Menge des in die Polymerschmelze injizierten Treibmittels niedrig liegt und daß die erhaltene Zellenstruktur feinporig ist. Bei der höchsten Temperatur jedes Temperaturbereiches wird eine relativ hohe Treibmittelmenge injiziert; die erhaltene Zellenstruktur ist grobporig. Die Zellengröße kann selbstverständlich auch über andere Variable als das Treibmittel gesteuert werden.

Bei den thermoplastischen Polymeren, die zu Kunststoffschaum verarbeitet werden können, handelt es sich um Polymere aus der Gruppe der Polyolefine, wie Polyethylen (HDPE, LDPE, LLDPE), chloriertes Polyethylen, Polypropylen (PP), Polypropylencopolymere (PPC), Ethylenvinylacetatcopolymer (EVA), halogenierte Polyolefine; aus der Gruppe der Styrolpolymere, wie Polystyrol (PS), Polystyrolcopolymere (PSC), Acrylonitrilbutadien-styrolcopolymere (ABS), Styrolmaleinsäureanhydrid, schlagfeste Polystyrole (SPS); aus der Gruppe der Polyester, wie Polyalkylenterephthalat; aus Ethylenpropylenterpolymerisat, Polyvinylchlorid (PVC), und/oder Polyphenylenoxid. Diese Aufzählung ist nur beispielhaft und erhebt keinen Anspruch auf Vollständigkeit.

Ebenso ist es möglich, Kunststoffschäume aus thermoplastischen Polymeren oder Blends thermoplastischer und nicht-thermoplastischer Polymere, aus Polymeren, Copolymeren oder Blends thermoplastischer Polymere und/oder Copolymere herzustellen. Derartige Blends können beispielsweise aus Polypropylen/Polyethylen, Polypropylen/Polybutylen, Polypropylen/Polyethylen/Polybutylenterpolymeren, bestehen.

Die Ausgangsstoffe der Kunststoffschäume sind dann jeweils Granulat, Pulver oder Masterbatch aus einem der voranstehend angeführten Polymere, Copolymere oder Blends, Nukleierungsmittel und Treibmittel.

Zum Herstellen der offenzelligen extrudierten Polymerschäume kann auch ein bestimmter Gewichtsanteil des Polymers durch ein Fremd-Polymer mit einem Gewichtsanteil in der gleichen Größenordnung ersetzt werden. Im allgemeinen ist der Gewichtsanteil des Fremd-Polymers kleiner als der Gewichtsanteil des Polymers und liegt in der Größenordnung von 0,2 bis 9 Gew.%, insbesondere 2 bis 5 Gew.%. Abhängig vom Extrudertyp kann es auch notwendig sein, den Anteil an Fremd-Polymer über 6 Gew.% bis auf 9 Gew.% anzuheben. Diesen Ausgangsstoffen können auch Additive, wie beispielsweise Benetzungsmittel, hinzugefügt werden, um die Aufnahmefähigkeit bzw. das Absorptionsvermögen für insbesondere polare Flüssigkeiten zu erhöhen. Die Dichten der Kunststoffschäume liegen im Bereich von 0,02 bis 0,350 g/cm$^3$, während die Aufnahmefähigkeit für polare Flüssigkeiten das 1- bis 30-fache, insbesondere das 8- bis 10-fache der Schaumdichte beträgt.

Das Fremd-Polymer wird in der Weise gewählt, daß es nur sehr geringe Affinität mit der Polymermatrix besitzt, d.h. mit anderen Worten, daß die Benetzbarkeit des Fremd-Polymers in der Polymermatrix nahezu Null ist. Eine mögliche Erklärung des Wirkmechanismus des Fremd-Polymers wird nachstehend gegeben, wodurch jedoch eine andere Hypothese zum Wirkmechanismus keineswegs ausgeschlossen werden soll.

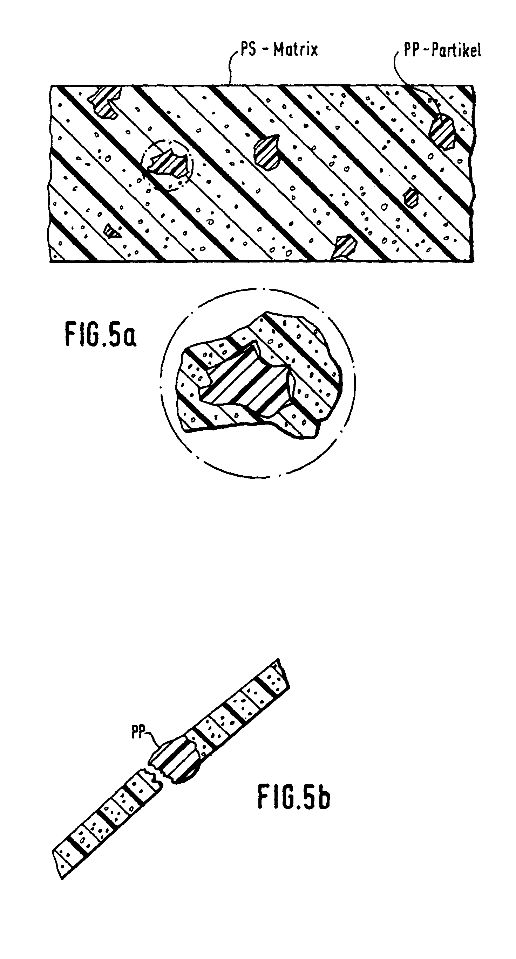

Unter dem Begriff "Fremd-Polymer" ist in diesem Zusammenhang ein amorpher, kristalliner oder teilkristalliner Thermoplast zu verstehen, der aufgrund seiner Unverträglichkeit in der Polymerschaummatrix eine disperse Phase bildet. Als morphologische Form liegt eine tröpfchenförmige Struktur vor, wie sie in Fig. 5a gezeigt ist. Hierbei handelt es sich um eine Polystyrolschaummatrix, in der das Fremd-Polymer, im vorliegenden Fall handelt es sich um Polypropylenpartikel, in der Polystyrolschaummatrix eingeschlossen ist. Wie die vergrößerte Detailansicht in Fig. 5a eines derartigen Polypropylenpartikels in der Polystyrolschaummatrix zeigt, sind die Adhäsionskräfte an den Phasengrenzflächen zwischen der Polystyrolschaummatrix und dem Polypropylenpartikel sehr niedrig. Beim Schaumbildungsvorgang, bei dem starke Zellenwanddehnungen hervorgerufen werden, kommt es zu einer Rißbildung an der Phasengrenzfläche, was vor allem bei hauchdünnen Zellenwänden zu der offenzelligen Struktur des Polystyrolsschaumes führt.

Die Rißbildung in einer Zellenwand ist im Detail in Figur 5b dargestellt. Die Zellenwandstärke beträgt ca. 3 μm, und es ist leicht zu erkennen, daß infolge der Rißbildung an der Phasengrenzfläche der beiden unterschiedlichen Polymere die Zellenwand in ihrer Gestalt weitgehend erhalten bleibt und nicht deformiert ist. Die Rißbildung kann noch durch die größere Volumenkontraktion des teilkristallinen Polymers, d.h. des Polypropylens, im Vergleich, zu Polystyrol, während der Abkühlung an der Phasengrenzfläche verstärkt werden, da bekannterweise die spezifische Volumenänderung von Polypropylen im gleichen Temperaturbereich von 150 °C bis 100 °C viel größer ist.

Als Treibmittel werden gesättigte, ungesättigte oder cyclische Kohlenwasserstoffe, halogenierte Kohlenwasserstoffe, Alkohole, Wasser, Stickstoff, Kohlendioxid oder Mischungen hiervon eingesetzt. Bevorzugt werden die Treibmittel aus der Gruppe Methan, Ethan, Ethen, Propan, Propen, n-Butan, 1-Buten, 2-Buten, Isobutan, Isobuten, n-Pentan, Isopentan, 2,2-Dimethylpropan, Cyclopentan ausgewählt. So kann, beispielsweise das Treibmittel eine Mischung aus Propan und n-Butan im Gewichtsverhältnis 30 bis 80 Gew.% Propan zu 20 bis 70 Gew.% n-Butan sein, ebenso kann, insbesondere bei der Herstellung von Polystyrolschaum, nur n-Butan eingesetzt werden. Als Nukleierungsmittel werden im allgemeinen Kohlensäure, Wasser, Stickstoff, Talkum, Kreide, Natriumcarbonat, Natriumbicarbonat und/oder Citronensäure mit einem Gewichtsanteil von 0,1 bis 5 Gew.% an der Polymerschmelze zugesetzt. Das Fremd-Polymer wird im allgemeinen aus der Gruppe Polyethylen, Polypropylen, Polypropylencopolymere, Polystyren, Ethylenvinylacetatcopolymere, Polymethylmethacrylat, Polyurethan, Polytetrafluorethylen ausgewählt. Dabei kann das Fremd-Polymer als Granulat, Masterbatch oder Pulver zugesetzt sein, und sein Gewichtsanteil an der Polymerschmelze liegt im Bereich von 0,2 bis 9 Gew.%.

Beim Hinzufügen eines Fremd-Polymers zu den Ausgangsstoffen der herzustellenden Polymerschmelze kann die optimale Temperatur von etwa 150 °C am Austritt der Extrusionsdüse beibehalten werden. Ohne Zusatz eines Benetzungsmittels sind die erhaltenen Kunststoffschaumfolien im allgemeinen schon dafür geeignet, apolare Flüssigkeiten, das sind ölähnliche Flüssigkeiten, zu absorbieren. Anders verhält es sich mit der Absorption von polaren Flüssigkeiten, wie z.B. Wasser, da die Wassertröpfchen aufgrund ihrer Oberflächenspannung im allgemeinen eine kugelähnliche Gestalt annehmen und dadurch der Phasengrenzwinkel zwischen der Oberfläche der Kunststoffschaumfolie und den Tröpfchen der polaren Flüssigkeit meistens zu groß ist, so daß es nicht zu einer Absorption der polaren Flüssigkeit kommt. Zur Verkleinerung des Phasengrenzwinkels einer polaren Flüssigkeit gegenüber den Zellenwänden bzw. gegenüber der Oberfläche der Kunststoffschaumfolie wird der Polymerschmelze Benetzungsmittel aus kation-, anionaktiven, amphoteren oder nicht-ionogenen Verbindungen hinzugesetzt. Bei diesen Benetzungsmitteln handelt es sich u.a. um Alkylsulfonate, von denen eines in Masterbatchform beispielsweise einer Polystyrolschmelze zugegeben wird. Der Gewichtsanteil des oder der Alkylsulfonate an der Schmelze beträgt im allgemeinen 0,1 bis 10 Gew.%, insbesondere 0,5 bis 5 Gew.%.

Zur Erhöhung der Absorptionsgeschwindigkeit von polaren Flüssigkeiten wird beispielsweise eine der Oberflächen der Kunststoffschaumfolie einer Corona-, Corona-Aerosol-Behandlung unterzogen. Ebenso ist es möglich, eine Molekularbeschichtung entsprechend dem sogenannten Nebelverfahren an einer der Oberflächen der Kunststoffschaumfolie vorzunehmen, um die Absorptionsgeschwindigkeit für polare Flüssigkeiten zu erhöhen und um aus einer wäßrigen Flüssigkeit, Emulsion oder dergleichen entweder den polaren oder apolaren Bestandteil selektiv zu absorbieren.

Die erhaltenen offenzelligen Kunststoffschaumfolien können in verschiedenen Dicken hergestellt werden und sind zu Platten, Profilen und Blöcken verarbeitbar. Ihre Anwendung finden sie vor allem als Saugfilter, Verpackungsschalen für Nahrungsmittel oder sonstige Feuchtigkeit enthaltende Güter.

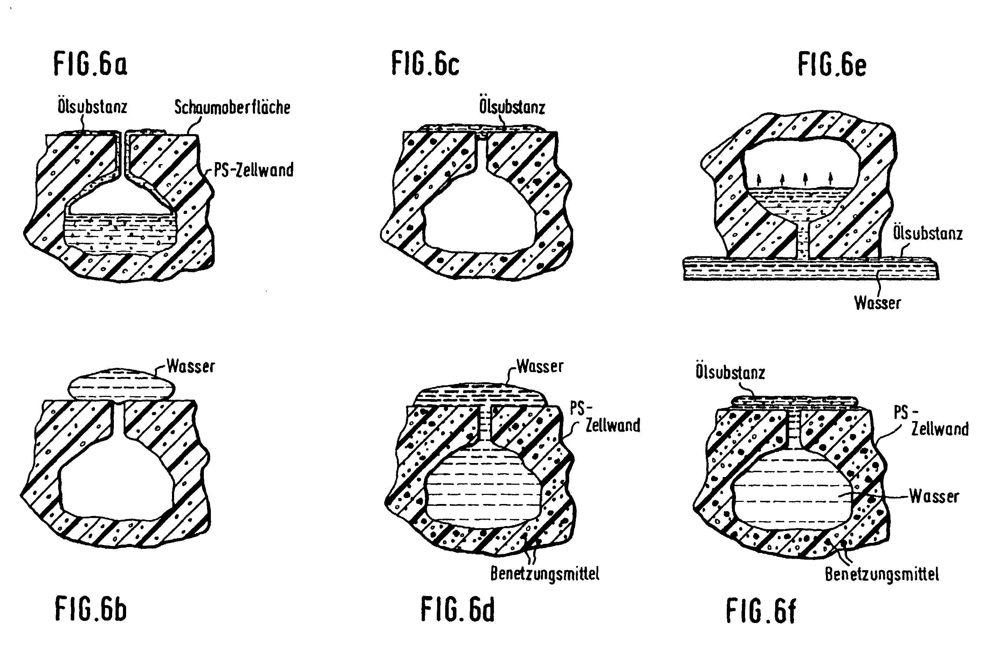

In Figur 6 sind schematisch Schnittdarstellungen im vergrößerten Detail von Zellenstrukturen von Kunststoffschaumfolien dargestellt und deren Flüssigkeitsabsorptionsverhalten angedeutet.

Figur 6a zeigt einen offenzelligen Polystyrolschaum, der mit der Basisrezeptur, wie sie nachstehend noch anhand der Beispiele angegeben wird, hergestellt wurde. Die Ausgangsstoffe dieses Polystyrolschaumes sind Polystyrolgranulat und Talkum als Nukleierungsmittel. Die Offenporigkeit wird durch die erhöhte Temperatur am Austritt der Extrusionsdüse erzielt. Wie der Figur 6a zu entnehmen ist, besitzt ein derartiger Polystyrolschaum ein großes Absorptionsvermögen für eine apolare Flüssigkeit, beispielsweise ein Öl, was gleichbedeutend damit ist, daß diese Flüssigkeit von der Schaumoberfläche unproblematisch in das Innere der offenen Zelle hineinfließen kann. Anders verhält sich das Absorptionsvermögen für eine polare Flüssigkeit, wie beispielsweise Wasser, wie Figur 6b erkennen läßt. Aufgrund der hohen Oberflächenspannung des Wassertropfens bildet sich ein relativ großer Phasengrenzwinkel zwischen der Oberfläche des Polystyrolschaumes und dem Wassertropfen aus, wodurch ein Eindringen des Wassertropfens in die offene Zelle weitgehend verhindert wird. Das gleiche Absorptionsverhalten für apolare und polare Flüssigkeiten zeigen auch offenzellige Polystyrolschäume, bei deren Herstellung ein Fremd-Polymer der Basisrezeptur zugesetzt wird und die Temperatur an der Extrusionsdüse bei etwa 150 °C liegt.

Die Figuren 6c und 6d zeigen das Absorptionsverhalten für apolare und polare Flüssigkeiten, wenn der Basisrezeptur bei der Herstellung des Polystyrolschaumes noch zusätzlich ein Benetzungsmittel hinzugefügt wird, das in den Schnittdarstellungen der Figuren 6c und d durch schwarze Punkte in der Polystyrolmatrix bzw. in den Polystyrolzellenwänden angedeutet ist. Durch das Benetzungsmittel wird der Phasengrenzwinkel polarer Flüssigkeiten, insbesondere von Wasser, so weit herabgesetzt, daß die polare Flüssigkeit ohne Probleme in die offene Zelle einfließt.

In Figur 6e ist gezeigt, daß die Absorption einer apolaren Flüssigkeit in einem offenzelligen Polystyrolschaum ohne Benetzungsmittel und ohne Vorbehandlung durch eine Koronaentladung oder eine Korona-Aerosol-Entladung stimuliert, d.h. beschleunigt, werden kann. Dabei kann der Polystyrolschaum entweder bei erhöhter Temperatur von 170 °C der Extrusionsdüse oder bei der herkömmlichen Temperatur von 150 °C, dann jedoch unter Zusatz eines Fremd-Polymers, hergestellt sein.

Aus Figur 6f ist zu entnehmen, daß durch eine Koronavorbehandlung die polare Flüssigkeitsabsorption in einem Polystyrolschaum, der Benetzungsmittel enthält, stimuliert, d.h. beschleunigt werden kann. Bei den Ausführungsformen des Polystyrolschaumes gemäß den Figuren 6e und f kommt es zu einer selektiven Absorption der apolaren (Öl) bzw. polaren (Wasser) Flüssigkeit aus einer Flüssigkeit, die beide Bestandteile enthält.

Im folgenden sind einige Beispiele für offenzellige Polystyrolschäume mit einer Schaumdichte von 70-75 g/l in Tabelle 1 angegeben. Im Beispiel A wird für den Polystyrolschaum die Normalrezeptur der Ausgangsstoffe der Polystyrolschmelze verwendet, d.h. Polystyrolgranulat mit 95 Gew.%, Talkum als Nukleierungsmittel mit 1 Gew.% und als Treibmittel Butan oder ein halogenierter Kohlenwasserstoff mit 4 Gew.%. Die Temperatur am Austritt der Extrusionsdüse beträgt etwa 170 °C. Bei den Beispielen B und C ist jeweils ein Fremd-Polymer in der Größenordnung von 3 Gew.% zugesetzt, während der Anteil des Treibmittels unverändert bleibt und der Anteil des Nukleierungsmittels auf 3 Gew.% erhöht ist. Die Temperatur der Düse beträgt 150 °C während des Extrusionsvorgangs. Dementsprechend betragen die Gewichtsanteile des Polystyrolgranulats 90 bzw. 87 Gew.%. Beim Beispiel C sind desweiteren noch 3 Gew.% Benetzungsmittel, beispielsweise Alkylsulfonat, zugesetzt, wodurch der so erhaltene Polystyrolschaum ein hohes selektives Absorptionsvermögen für polare bzw. wäßrige Flüssigkeiten besitzt. Der Polystyrolschaum gemäß Beispiel D enthält 92 Gew.% Polystyrol, 1 Gew.% Nukleierungsmittel, kein Fremd-Polymer, 3 Gew.% Benetzungsmittel und 4 Gew.% Treibmittel. Die Temperatur an der Düse beträgt 170 °C während des Extrusionsvorgangs. In Tabelle 2 sind die Schaumdichten, die maximale Flüssigkeitsaufnahme für Wasser und das Absorptionsvermögen von Polystyrolschäumen zusammengestellt. Die Flüssigkeitsaufnahme wird gemäß der Formel

$$\text{Flüssigkeitsaufnahme} = \rho_{FL} \left(1 - \frac{\rho_F}{\rho_{PS}}\right)$$

bestimmt, mit der Flüssigkeitsdichte $\rho_{FL}$, der Schaumdichte $\rho_F$ und der Polystyroldichte $\rho_{PS}$ jeweils in g/l.

Tabelle 1

| | A Normalrezeptur | B Selektive Absorption für ölartige Flüssigkeiten | C Selektive Absorption für wäßrige Flüssigkeiten | D Selektive Absorption für wäßrige Flüssigkeiten |
|---|---|---|---|---|
| PS-Granulat | 95 % | 90 % | 87 % | 92 % |
| Nukleierungsmittel (z.B. Talkum) | 1 % | 3 % | 3 % | 1 % |
| Fremd-Polymere (z. B. PE, PP, PPC, EVA) | - | 3 % | 3 % | - |
| Benetzungsmittel (z. B. Alkylsulfonat) | - | - | 3% | 3% |
| Treibmittel (z.B. Alkane, wie Butan, halogenierte Kohlenwasserstoffe) | 4 % | 4 % | 4 % | 4% |
| Konstellation Zellenstruktur (fein) ≤0,4 mm | offen | offen | offen | offen |

Tabelle 2

| Schaumdichte (gr/l) | Maximale Flüssigkeitsaufnahme für Wasser (gr/l) | Absorptionsvermögen |
|---|---|---|
| 30 | 971,4 | 32,4 |
| 40 | 961,9 | 24,0 |
| 50 | 952,4 | 19,0 |
| 60 | 942,9 | 15,7 |
| 70 | 933,3 | 13,3 |

Tabelle 2 (fortgesetzt)

| Schaumdichte (gr/l) | Maximale Flüssigkeitsaufnahme für Wasser (gr/l) | Absorptionsvermögen |
|---|---|---|
| 80 | 923,8 | 11,5 |
| 90 | 914,3 | 10,2 |
| 100 | 904,8 | 9,0 |

**Patentansprüche**

1. Formgebilde aus einem thermoplastischen Kunststoffschaum, dessen eine Oberfläche geschlossen und dessen andere Oberfläche zumindest in einem Teilbereich geöffnet ist, so daß die an diese Oberfläche angrenzenden Zellen für Flüssigkeiten zugänglich sind, wobei der Kunststoffschaum im Inneren zumindest 10 Vol.% offene Zellen enthält, die Zellen (2,4) eine polyederähnliche Gestalt besitzen, in einer Raummatrix (8) aneinandergrenzen und Zellenwände (5,6) aufweisen, die mit Öffnungen (7) versehen sind, ansonsten keinerlei mechanische Deformationen aufweisen und zumindest zwei Zellenwände (5,6) jeder offenen Zelle (4) mit solchen Öffnungen (7) ausgestattet sind, unter Beibehaltung der mechanischen Festigkeit der Raummatrix (8).

2. Formgebilde nach Anspruch 1, **dadurch gekennzeichnet, daß** das Formgebilde ein thermoplastischer Schaum zumindest eines Kunststoffes ist, aus der Gruppe der Polyolefine, wie Polyethylen (HDPE, LDPE, LLDPE), chloriertes Polyethylen, Polypropylen (PP), Polypropylencopolymere (PPC), Ethylenvinylacetatcopolymer (EVA), halogenierte Polyolefine; aus der Gruppe der Styrolpolymere, wie Polystyrol (PS), Polystyrolcopolymere (PSC), Acrylonitrilbutadienstyrolcopolymere (ABS), Styrolmaleinsäureanhydrid,schlagfeste Polystyrole (SPS); aus der Gruppe der Polyester, wie Polyalkylenterephthalat; aus Ethylenpropylenterpolymerisat, Polyvinylchlorid (PVC); und/oder Polyphenylenoxid.

3. Formgebilde nach Anspruch 2, **dadurch gekennzeichnet, daß** der Kunststoffschaum aus thermoplastischen Polymeren oder Blends thermoplastischer Polymeren oder Blends thermoplastischer und nicht-thermoplastischer Polymeren besteht.

4. Formgebilde nach Anspruch 3, **dadurch gekennzeichnet, daß** die Ausgangsstoffe des Kunststoffschaums zumindest ein Polymer als Basispolymer und ein Treibmittel und/oder ein Nukleierungsmittel sind.

5. Formgebilde nach Anspruch 4, **dadurch gekennzeichnet, daß** das Basispolymer Polystyrol mit bis zu 95 Gew.%, das Nukleierungsmittel Talkum, Kreide, Natriumcarbonat, Natriumbicarbonat und/oder Citronensäure mit bis zu 3 Gew.% und das Treibmittel Butan, Propan oder Mischungen hiervon mit bis zu 6 Gew.% sind.

6. Formgebilde nach Anspruch 4, **dadurch gekennzeichnet, daß** ein bestimmter Gewichtsanteil des Basispolymers durch ein Fremd-Polymer mit einem Gewichtsanteil in der gleichen Größenordnung ersetzt ist.

7. Formgebilde nach Anspruch 6, **dadurch gekennzeichnet, daß** der Gewichtsanteil des Fremd-Polymers kleiner als der Gewichtsanteil des Basispolymers ist.

8. Formgebilde nach Anspruch 7, **dadurch gekennzeichnet, daß** der Gewichtsanteil des Fremd-Polymers 0,2 bis 9 Gew.%, insbesondere 2 bis 5 Gew.%, beträgt.

9. Formgebilde nach den Ansprüchen 5 und 8, **dadurch gekennzeichnet, daß** der Kunststoffschaum als Ausgangsstoffe Polystyrolgranulat mit ca. 90 Gew.%, Talkum mit ca. 3 Gew.%, Butan mit bis zu 4 Gew.% und Polypropylen-Copolymer mit bis zu 3 Gew.% enthält.

10. Formgebilde nach Anspruch 6, **dadurch gekennzeichnet, daß** das Basispolymer Polystyrol ist und daß das Fremd-Polymer aus der Gruppe Polyethylen, Polypropylen, Polypropylencopolymere, Ethylenvinylacetatcopolymere, Polymethylmethacrylat, Polytetrafluorethylen, Polyurethan ausgewählt ist.

11. Formgebilde nach Anspruch 6, **dadurch gekennzeichnet, daß** die Ausgangsstoffe des Kunststoffschaumes Basispolymer, Nukleierungsmittel, Treibmittel, Fremd-Polymer und, als Additiv, ein Benetzungsmittel sind.

12. Formgebilde nach Anspruch 11, **dadurch gekennzeichnet, daß** der Kunststoffschaum als Ausgangsstoffe 87 Gew.% Polystyrolgranulat, 3 Gew.% Talkum, 4 Gew.% Treibmittel aus der Gruppe Butan, Propan, Wasserstofffluoralkane, 3 Gew.% Fremd-Polymer aus der Gruppe Polypropylen, Polypropylencopolymere, Polyethylen und 3 Gew.% Alkylsulfonat als polares Benetzungsmittel enthält.

13. Formgebilde nach Anspruch 11, **dadurch gekennzeichnet, daß** die Dichte im Bereich von 0,020 bis 0.350 g/cm$^3$ liegt.

14. Formgebilde nach den Ansprüchen 12 und 13, **dadurch gekennzeichnet, daß** die Aufnahmefähigkeit des Kunststoffschaumes für polare und apolare Flüssigkeiten das 1 - bis 30-fache, insbesondere das 8- bis 10-fache, der Schaumdichte beträgt.

15. Formgebilde nach Anspruch 1, **dadurch gekennzeichnet, daß** die Zellen eine maximale Abmessung von ≤ 1,0 mm, insbesondere von ≤ 0,4 mm aufweisen.

16. Verfahren zur Herstellung eines Formgebildes aus einem thermoplastischen Kunststoffschaum, dessen eine Oberfläche geschlossen und dessen andere Oberfläche zumindest in einem Teilbereich geöffnet ist, so daß die an diese Oberfläche angrenzenden Zellen für Flüssigkeiten zugänglich sind, wobei der Kunststoffschaum im Inneren zumindest 10 Vol.% offene Zellen enthält, die Zellen eine polyederähnliche Gestalt und Zellwände besitzen, die mit Öffnungen versehen sind, ansonsten keinerlei mechanische Deformationen aufweisen und zumindest zwei Zeilenwände jeder offenen Zelle mit solchen Öffnungen ausgestaltet sind, unter Beibehaltung der mechanischen Festigkeit der Raummatrix, bei dem

- die Polymermischung aus zumindest einem Basispolymer und Nukleierungsmittel sowie gegebenenfalls einem Fremdpolymer in einem ersten Extrusionsschritt bei einer Temperatur bis zu 300 °C aufgeschmolzen wird,
- ein Treibmittel unter hohem Druck von bis zu 350 bar am Ende des ersten Extrusionsschrittes in die Polymerschmelze injiziert und mit dieser homogen vermischt wird,
- in einem zweiten Extrusionsschritt die Polymerschmelze auf eine Massetemperatur im Bereich von 120 °C bis 250 °C unmittelbar vor der Extrusion abgekühlt wird, wobei mit Fremd-Polymer in der Polymerschmelze die Extrusion bei der gleichen Massetemperatur wie die Extrusion von geschlossenzelligen Kunststoffschäumen stattfindet und ohne Fremd-Polymer in der Polymerschmelze die Massetemperatur 10 bis 20 % höher ist als die Massetemperatur bei der Extrusion geschlossenzelliger Kunststoffschäume, und zumindest eine der Oberflächen des extrudierten Formgebildes durch mechanisches Bearbeiten, wie Abschaben, Ritzen oder Perforieren oder durch Abkühlen und gleichzeitiges Dehnen beim Austritt aus der Extrusionsdüse teilweise geöffnet wird.

17. Verfahren nach Anspruch 16, **dadurch gekennzeichnet, daß** ein bestimmter Gewichtsanteil des Basispolymers durch einen Gewichtsanteil in der gleichen Größenordnung eines Fremd-Polymers ersetzt wird und daß die Benetzbarkeit des Fremd-Polymers in der Polymerschmelze nahezu Null ist.

18. Verfahren nach Anspruch 16, **dadurch gekennzeichnet, daß** die Basispolymerschmelze aus zumindest einem Kunststoff aus der Gruppe der Polyolefine, wie Polyethylen, chloriertes Polyethylen, Polypropylen, Polypropylencopolymere, Ethylenvinylacetatcopolymere, halogenierte Polyolefine; aus der Gruppe der Styrolpolymere, wie Polystyrol (PS), Polystyrolcopolymere (PSC), Acrylnitrilbutadienstyrolcopolymere (ABS), Styrolmaleinsäureanhydrid, schlagfeste Polystyrole (SPS); aus der Gruppe der Polyester, wie Polyalkylenterephthalat; aus Ethylenpropylenterpolymerisat, Polyvinylchlorid (PVC), und/oder Polyphenylenoxid, erschmolzen wird.

19. Verfahren nach Anspruch 16, **dadurch gekennzeichnet, daß** als Treibmittel gesättigte, ungesättigte oder cyclische Kohlenwasserstoffe, halogenierte Kohlenwasserstoffe, Alkohole, Wasser, Stickstoff, Kohlendioxid oder Mischungen hiervon eingesetzt werden.

20. Verfahren nach Anspruch 19, **dadurch gekennzeichnet, daß** das Treibmittel aus der Gruppe Methan, Ethan, Ethen, Propan, Propen, n-Butan, 1-Buten, 2-Buten, Isobutan, Isobuten, n-Pentan, Isopentan, 2,2-Dimethylpropan, Cyclopentan ausgewählt wird.

21. Verfahren nach Anspruch 20, **dadurch gekennzeichnet, daß** das Treibmittel eine Mischung aus Propan und n-Butan im Gewichtsverhältnis 30 bis 80 Gew.% Propan zu 20 bis 70 Gew.% n-Butan ist

22. Verfahren nach Anspruch 17, **dadurch gekennzeichnet, daß** ein Fremd-Polymer aus der Gruppe Polyethylen, Polypropylen, Polypropylencopolymere, Ethylenvinylacetatcopolymere, Polymethylmethacrylat, Polyurethan, Polytetrafluorethylen, dem Polystyrol als Basispolymer der Polymerschmelze zugesetzt wird und daß durch das Fremd-Polymer in der Polymerschmelze die Zellenwände ohne mechanische Zerstörungen der Stege der Zellenwände geöffnet werden.

**23.** Verfahren nach Anspruch 17, **dadurch gekennzeichnet, daß** das Fremd-Polymer als Granulat, Masterbatch oder Pulver zugesetzt wird und sein Gewichtsanteil an der Polymerschmelze 0,2 bis 9 Gew.%, insbesondere 2 bis 5 Gew.%, beträgt.

**24.** Verfahren nach Anspruch 16, **dadurch gekennzeichnet, daß** als Nukleierungsmittel, Kohlensäure, Wasser, Stickstoff, Talkum, Kreide, Natriumcarbonat, Natriumbicarbonat und/oder Citronensäure mit einem Gewichtsanteil von 0,05 bis 5 Gew.% an der Polymerschmelze zugesetzt wird.

**25.** Verfahren nach Anspruch 17, **dadurch gekennzeichnet, daß** zur Verkleinerung des Phasengrenzwinkels einer polaren Flüssigkeit gegenüber den Zellenwänden des Formgebildes der Polymerschmelze Benetzungsmittel aus kation-, anionaktiven, amphoteren oder nicht-ionogenen Verbindungen zugegeben werden.

**26.** Verfahren nach Anspruch 25, **dadurch gekennzeichnet, daß** die Zudosierung von Alkylsulfonaten als Benetzungsmittel in Masterbatchform geschieht und daß der Gewichtsanteil des oder der Alkylsulfonate an der Polymerschmelze 0,1 bis 10 Gew.%, insbesondere 0,5 bis 5 Gew.%, beträgt.

**27.** Verfahren nach Anspruch 16, **dadurch gekennzeichnet, daß** zur Erhöhung der Absorptionsgeschwindigkeit von polaren Flüssigkeiten eine der Oberflächen des Formgebildes einem Korona-, Korona-Aerosol- oder einem Molekularbeschichtungsverfahren (MCS) ausgesetzt wird.

**28.** Verwendung des Formgebildes nach einem oder mehreren der Ansprüche 1 bis 15 als Verpackungsmaterial für Feuchtigkeit enthaltendes Gut.

**29.** Verwendung des Formgebildes nach einem oder mehreren der Ansprüche 1 bis 15 als Saugfilter für polare und/oder apolare Flüssigkeiten.

## Claims

**1.** A molded structure comprising a thermoplastic foam, one surface of which is closed and the other surface of which is open at least in part so that the cells adjacent to this surface are accessible to liquids, the inside of the expanded plastic containing at least 10% by volume of open cells, the cells (2, 4) having a polyhedron-like shape, adjoining one another in a three-dimensional matrix (8) and having cell walls (5, 6) which are provided with orifices (7) but otherwise have no mechanical deformations at all, and at least two cell walls (5, 6) of each open cell (4), being provided with such orifices (7), with retention of the mechanical strength of the space matrix (8).

**2.** The molded structure as claimed in claim 1, which is a thermoplastic foam of at least one plastic selected from the group consisting of the polyolefins, such as polyethylene (HDPE, LDPE, LLDPE), chlorinated polyethylene, polypropylene (PP), polypropylene copolymers (PPC), ethylene/vinyl acetate copolymers (EVA) and halogenated polyolefins; selected from the group consisting of the styrene polymers, such as polystyrene (PS), polystyrene copolymers (PSC), acrylonitrile/butadiene/styrene copolymers (ABS), styrene/maleic anhydride and high-impact polystyrenes (HIPS); selected from the group consisting of the polyesters, such as polyalkylene terephthalate; selected from the group consisting of ethylene/propylene terpolymer and polyvinyl chloride (PVC); and/or polyphenylene oxide.

**3.** The molded structure as claimed in claim 2, wherein the expanded plastic comprises thermoplastic polymers or blends of thermoplastic polymers or blends of thermoplastic and nonthermoplastic polymers.

**4.** The molded structure as claimed in claim 3, wherein the starting materials of the expanded plastic are at least one polymer as basic polymer and one blowing agent and/or one nucleating agent.

**5.** The molded structure as claimed in claim 4, wherein the basic polymer comprises up to 95% by weight of polystyrene, the nucleating agent comprises up to 3% by weight of talc, chalk, sodium carbonate, sodium bicarbonate and/or citric acid and the blowing agent comprises up to 6% by weight of butane, propane or mixtures thereof.

6. The molded structure as claimed in claim 4, wherein a certain amount by weight of the basic polymer is replaced by a foreign polymer in an amount by weight which is of the same order of magnitude.

7. The molded structure as claimed in claim 6, wherein the amount by weight of the foreign polymer is less than the amount by weight of the basic polymer.

8. The molded structure as claimed in claim 7, wherein the amount by weight of the foreign polymer is 0.2 to 9% by weight, in particular 2 to 5% by weight.

9. The molded structure as claimed in claims 5 and 8, wherein the expanded plastic contains, as starting materials, about 90% by weight of polystyrene granules, about 3% by weight of talc, up to 4% by weight of butane and up to 3% by weight of polypropylene copolymer.

10. The molded structure as claimed in claim 6, wherein the basic polymer is polystyrene and the foreign polymer is selected from the group consisting of polyethylene, polypropylene, polypropylene copolymers, ethylene/vinyl acetate copolymers, polymethyl methacrylate, polytetrafluoroethylene and polyurethane.

11. The molded structure as claimed in claim 6, wherein the starting materials of the expanded plastic are basic polymer, nucleating agent, blowing agent, foreign polymer and, as an additive, a wetting agent.

12. The molded structure as claimed in claim 11, wherein the expanded plastic contains, as starting materials, 87% by weight of polystyrene granules, 3% by weight of talc, 4% by weight of a blowing agent selected from the group consisting of butane, propane and hydrogen-containing fluoroalkanes, 3% by weight of a foreign polymer selected from the group consisting of polypropylene, polypropylene copolymers and polyethylene and 3% by weight of alkanesulfonate as a polar wetting agent.

13. The molded structure as claimed in claim 11, wherein the density is in the range from 0.020 to 0.350 $g/cm^3$.

14. The molded structure as claimed in claims 12 and 13, wherein the absorptivity of the expanded plastic for polar and apolar liquids is 1 to 30 times, in particular 8 to 10 times, the foam density.

15. The molded structure as claimed in claim 1, wherein the cells have a maximum dimension of $\leq 1.0$ mm, in particular of $\leq 0.4$ mm.

16. A process for the production of a molded structure comprising a thermoplastic foam, one surface of which is closed and the other surface of which is open at least in part so that the cells adjacent to this surface are accessible to liquids, the inside of the expanded plastic containing at least 10% by volume of open cells, the cells having a polyhedron-like shape and cell walls which are provided with orifices but otherwise have no mechanical deformations at all, and at least two cell walls of each open cell, being provided with such orifices, with retention of the mechanical strength of the space matrix, in which process

   - the polymer mixture containing at least one basic polymer and nucleating agent and also optionally a foreign polymer is melted in a first extrusion step at a temperature of up to 300°C,
   - a blowing agent is injected under high pressure of up to 350 bar into the polymer melt at the end of the first extrusion step and said blowing agent is mixed homogeneously with said melt,
   - in a second extrusion step the polymer melt is cooled to a melt temperature in the range from 120°C to 250°C immediately before extrusion, the foreign polymer in the polymer melt the extrusion taking place at the same melt temperature as the extrusion of closed-cell expanded plastics and without foreign polymer in the polymer melt the melt temperature being 10 to 20% higher than the melt temperature during extrusion of closed-cell expanded plastics, and at least one of the surfaces of the extruded molded structure being partially opened by mechanical processing, such as scraping, scratching or perforation, or by cooling and simultaneous extension on emergence from the extrusion die.

17. The process as claimed in claim 16, wherein a certain amount by weight of the basic polymer is replaced by a foreign polymer in an amount by weight which is of the same order of magnitude, and the wettability of the foreign polymer in the polymer melt is virtually zero.

18. The process as claimed in claim 16, wherein the basic polymer melt is obtained by melting at least one plastic selected from the group consisting of the polyolefins, such as polyethylene, chlorinated polyethylene, polypropylene, polypropylene copolymers, ethylene/vinyl acetate copolymers and halogenated polyolefins; selected from the group consisting of the styrene polymers, such as polystyrene (PS), polystyrene copolymers (PSC), acrylonitrile/butadiene/styrene copolymers (ABS), styrene/maleic anhydride and high-impact polystyrenes (HIPS); selected from the group consisting of the polyesters, such as polyalkylene terephthalate; selected from the group consisting of ethylene/propylene terpolymer and polyvinyl chloride (PVC); and/or polyphenylene oxide.

19. The process as claimed in claim 16, wherein the blowing agents used are saturated, unsaturated or cyclic hydrocarbons, halogenated hydrocarbons, alcohols, water, nitrogen, carbon dioxide or mixtures thereof.

20. The process as claimed in claim 19, wherein the blowing agent is selected from the group consisting of methane, ethane, ethene, propane, propene, n-butane, 1-butene, 2-butene, isobutane, isobutene, n-pentane, isopentane, 2,2-dimethylpropane and cyclopentane.

21. The process as claimed in claim 20, wherein the blowing agent is a mixture of propane and n-butane in a weight ratio of 30 to 80% by weight of propane to 20 to 70% by weight of n-butane.

22. The process as claimed in claim 17, wherein a foreign polymer selected from the group consisting of polyethylene, polypropylene, polypropylene copolymers, ethylene/vinyl acetate copolymers, polymethyl methacrylate, polyurethane and polytetrafluoroethylene is added to the polystyrene as the basic polymer of the polymer melt, and the cell walls are opened by the foreign polymer in the polymer melt without mechanical destruction of the webs of the cell walls.

23. The process as claimed in claim 17, wherein the foreign polymer is added as granules, masterbatch or powder, and its amount by weight is 0.2 to 9% by weight, in particular 2 to 5% by weight, based on the polymer melt.

24. The process as claimed in claim 16, wherein carbonic acid, water, nitrogen, talc, chalk, sodium carbonate, sodium bicarbonate and/or citric acid, in an amount by weight of 0.05 to 5% by weight, based on the polymer melt, are added as nucleating agent.

25. The process as claimed in claim 17, wherein wetting agents comprising cationic, anionic, amphoteric or nonionic compounds are added to the polymer melt to reduce the phase boundary angle of a polar liquid relative to the cell walls of the molded structure.

26. The process as claimed in claim 25, wherein alkanesulfonates are metered in as wetting agents in masterbatch form, and the amount by weight of the alkanesulfonate or alkanesulfonates is 0.1 to 10% by weight, in particular 0.5 to 5% by weight, based on the polymer melt.

27. The process as claimed in claim 16, wherein one of the surfaces of the molded structure is subjected to a corona process, a corona aerosol process or a molecular coating process (MCS) in order to increase the absorption rate of polar liquids.

28. The use of the molded structure as claimed in one or more of claims 1 to 15 as packaging material for moisture-containing goods.

29. The use of the molded structure as claimed in one or more of claims 1 to 15 as a suction filter for polar and/or apolar liquids.

**Revendications**

1. Structure à base d'une mousse synthétique thermoplastique, dont une surface est fermée et dont l'autre surface est ouverte au moins en une zone partielle, de sorte que les cellules contiguës à cette surface sont accessibles à des liquides, la mousse synthétique contenant à l'intérieur au moins 10 % de cellules ouvertes, les cellules (2, 4) ayant une forme polyédrique et étant contiguës les unes aux autres dans une matrice spatiale (8) et comportant des parois cellulaires (5, 6) qui sont munies d'orifices (7), mais par ailleurs ne présentent pas de déformations mécaniques, et au moins deux parois cellulaires (5, 6) de chaque cellule ouverte (4) étant munies de tels orifices (7), avec maintien de la résistance mécanique de la matrice spatiale (8).

2. Structure selon la revendication 1, **caractérisée en ce que** la structure est une mousse thermoplastique d'au moins une matière plastique, choisie parmi les polyoléfines, telles que le polyéthylène (PEhd, PEbd, PEbdl), le polyéthylène chloré, le polypropylène (PP), des copolymères de polypropylène (PPC), un copolymère éthylène/ acétate de vinyle (EVA), des polyoléfines halogénées ; les polymères de styrène, tels que le polystyrène (PS), des copolymères de polystyrène (PSC), des copolymères acrylonitrile/styrène (ABS), des polystyrènes styrène/anhydride maléique résistants au choc (SPS) ; les polyesters, tels qu'un poly(alkylène téréphtalate) ; un terpolymère éthylène/propylène, le poly(chlorure de vinyle) (PVC) et/ou le polyoxyphénylène.

3. Structure selon la revendication 2, **caractérisée en ce que** la mousse synthétique est à base de polymères thermoplastiques ou d'alliages de polymères thermoplastiques ou d'alliages de polymères thermoplastiques et de polymères non thermoplastiques.

4. Structure selon la revendication 3, **caractérisée en ce que** les produits de départ de la dusse synthétique sont au moins un polymère, en tant que polymère de base, et un porogène et/ou un agent de nucléation.

5. Structure selon la revendication 4, **caractérisée en ce que** le polymère de base est un polystyrène contenu à raison de jusqu'à 95 % en poids, l'agent de nucléation est le talc, la craie, le carbonate de sodium, le bicarbonate de sodium et/ou l'acide citrique, contenue à raison de jusqu'à 3 % en poids, et le porogène est le butane, le propane ou des mélanges de ceux-ci, contenus à raison de jusqu'à 6% en poids.

6. Structure selon la revendication 4, **caractérisée en ce qu'**une certaine proportion en poids du polymère de base est remplacée par un polymère étranger, contenu en une proportion en poids du même ordre de grandeur.

7. Structure selon la revendication 6, **caractérisée en ce que** la proportion en poids du polymère étranger est inférieure à la proportion en poids du polymère de base.

8. Structure selon la revendication 7, **caractérisée en ce que** la proportion en poids du polymère étranger va de 0,2 à 9 % en poids, en particulier de 2 à 5 % en poids.

9. Structure selon les revendications 5 et 8, **caractérisée en ce que** la mousse synthétique contient, en tant que produits de départ, un produit granulé de polystyrène contenu à raison d'environ 90 % en poids, du talc contenu à raison d'environ 3 % en poids, du butane contenu à raison de jusqu'à 4 % en poids et un copolymère de polypropylène contenu à raison de jusqu'à 3 % en poids.

10. Structure selon la revendication 6, **caractérisée en ce que** le polymère de base est un polystyrène, et **en ce que** le polymère étranger est choisi parmi le polyéthylène, le polypropylène, des copolymères de polypropylène, des copolymères éthylène/acétate de vinyle, le poly(méthacrylate de méthyle), le polytétrafluoroéthylène, le polyuréthanne.

11. Structure selon la revendication 6, **caractérisée en ce que** les produits de départ de la mousse synthétique sont un polymère de base, un agent de nucléation, un porogène, un polymère étranger et, en tant qu'additif, un agent mouillant.

12. Structure selon la revendication 11, **caractérisée en ce que** la mousse synthétique contient comme produits de départ 87 % en poids d'un produit granulé de polystyrène, 3 % en poids de talc, 4 % en poids d'un porogène choisi parmi le butane, le propane, des hydrocarbures fluorés, 3 % en poids d'un polymère étranger choisi parmi le polypropylène, des copolymères de polypropylène, le polyéthylène, et 3 % en poids d'un alkylsulfonate en tant qu'agent mouillant polaire.

13. Structure selon la revendication 11, **caractérisée en ce que** la densité est dans la plage allant de 0,020 à 0,350 g/cm$^3$.

14. Structure selon les revendications 12 et 13, **caractérisée en ce que** la capacité d'absorption de la mousse synthétique pour des liquides polaires et des liquides non polaires représente de 1 à 30 fois, en particulier de 8 à 10 fois la densité de la mousse.

**15.** Structure selon la revendication 1, **caractérisée en ce que** les cellules ont une dimension maximale ≤ 1,0 mm, en particulier ≤ 0,4 mm.

**16.** Procédé pour la fabrication d'une structure à partir d'une mousse synthétique thermoplastique, dont une surface est fermée et dont l'autre surface est ouverte en au moins une zone partielle, de sorte que les cellules contiguës à cette surface sont accessibles à des liquides, la mousse synthétique contenant à l'intérieur au moins 10 % en volumes de cellules ouvertes, les cellules ayant une forme polyédrique et comportant des parois cellulaires qui sont munies d'orifices, mais par ailleurs ne présentent pas de déformations mécaniques, et au moins deux parois cellulaires de chaque cellule ouverte étant munies de tels orifices, avec maintien de la résistance mécanique de la matrice spatiale dans lequel :

- le mélange polymère, constitué d'au moins un polymère de base et d'un agent de nucléation ainsi qu'éventuellement d'un polymère étranger, est fondu à une température de jusqu'à 300°C, dans une première étape d'extrusion ;
- à la fin de la première étape d'extrusion, un porogène est injecté, sous une haute pression allant jusqu'à 350 bars, dans la masse fondue de polymère, et mélangé de façon homogène avec celle-ci ;
- dans une seconde étape d'extrusion, la masse fondue de polymère est refroidie, immédiatement avant l'extrusion, à une température de la matière dans la plage allant de 120 à 250°C, où en présence de polymère étranger dans la masse fondue de polymère, l'extrusion a lieu à la même température de la masse que l'extrusion de mousses synthétiques à cellules fermées, et, où sans polymère étranger dans la masse fondue de polymère, la température de la matière supérieure de 10 à 20 % à la température de la matière dans l'extrusion de mousses synthétiques à cellules fermées, et au moins l'une des surfaces de la structure extrudée étant partiellement ouverte par usinage mécanique, tel que grattage, entaillage ou perforation, ou par refroidissement et extension simultanée lors de la sortie de la filière d'extrusion.

**17.** Procédé selon la revendication 16, **caractérisé en ce qu'**une certaine proportion en poids du polymère de base est remplacée par une proportion en poids du même ordre de grandeur d'un polymère étranger, et **en ce que** la mouillabilité du polymère étranger dans la masse fondue de polymère est presque nulle.

**18.** Procédé selon la revendication 16, **caractérisé en ce que** la masse fondue de polymère de base est élaborée à partir d'au moins une matière plastique choisie parmi les polyoléfines, telles que le polyéthylène, le polyéthylène chloré, le polypropylène, des copolymères de polypropylène, des copolymères éthylène/acétate de vinyle, des polyoléfines halogénées ; les polymères de styrène, tels que le polystyrène (PS), des copolymères de polystyrène (PSC), des copolymères acrylonitrile/butadiène/styrène (ABS), des polystyrènes styrène/anhydride maléique résistants au choc (SPC) ; les polyesters, tels qu'un poly (alkylène téréphtalate) ; un terpolymère éthylène/propylène, le poly(chlorure de vinyle) (PVC) et/ou le polyoxyphénylène.

**19.** Procédé selon la revendication 16, **caractérisé en ce que**, en tant que porogène, on utilise des hydrocarbures saturés, insaturés ou cycliques, des hydrocarbures halogènes, des alcools, l'eau, l'azote, le dioxyde de carbone ou des mélanges de ceux-ci.

**20.** Procédé selon la revendication 19, **caractérisé en ce que** le porogène est choisi parmi le méthane, l'éthane, l'éthène, le propane, le propène, le n-butane, le 1-butène, le 2-butène, l'isobutane, l'isobutène, le n-pentane, l'isopentane, le 2,2-diméthylpropane, le cyclopentane.

**21.** Procédé selon la revendication 20, **caractérisé en ce que** le porogène est un mélange de propane et de n-butane en un rapport pondéral allant de 30 à 80 % en poids de propane pour 20 à 70 % en poids de n-butane.

**22.** Procédé selon la revendication 17, **caractérisé en ce que** l'on ajoute au polystyrène, en tant que polymère de base de la masse fondue de polymère, un polymère étranger choisi parmi le polyéthylène, le polypropylène, des copolymères de polypropylène, des copolymères éthylène/acétate de vinyle, le poly(méthacrylate de méthyle), le polyuréthanne, le polytétrafluoroéthylène, et **en ce que**, en raison de la présence du polymère étranger dans la masse fondue de polymère, les parois cellulaires sont ouvertes sans destruction mécanique des arêtes des parois cellulaires.

**23.** Procédé selon la revendication 17, **caractérisé en ce que** le polymère étranger est ajouté sous forme de produit granulé, de mélange-maître ou de poudre et sa proportion en poids dans la masse fondue de polymère va de 0,2 à 9 % en poids, en particulier de 2 à 5 % en poids.

24. Procédé selon la revendication 16, **caractérisé en ce que**, en tant qu'agent de nucléation, on ajoute de l'acide carbonique, de l'eau, de l'azote, du talc, de la craie, du carbonate de sodium, du bicarbonate de sodium et/ou de l'acide citrique, en une proportion en poids allant de 0,05 à 5 % en poids de la masse fondue de polymère.

25. Procédé selon la revendication 17, **caractérisé en ce que**, pour diminuer l'angle de limite de phase d'un liquide polaire par rapport aux parois cellulaires de la structure, on ajoute à la masse fondue de polymère un agent mouillant à base de composés cationiques, anioniques, amphotères ou non ioniques.

26. Procédé selon la revendication 25, **caractérisé en ce que** l'addition réglée d'alkylsulfonates, en tant qu'agent mouillant, s'effectue sous forme de mélange-maître, et **en ce que** la proportion en poids du ou des alkylsulfonates dans la masse fondue de polymère va de 0,1 à 10 % en poids, en particulier de 0,5 à 5 % en poids.

27. Procédé selon la revendication 16, **caractérisé en ce que**, pour augmenter la vitesse d'absorption de liquides polaires, on soumet l'une des surfaces de la structure à un procédé de traitement par effet couronne ou par effet couronne-aérosol ou de revêtement moléculaire (MCS).

28. Utilisation de la structure selon une ou plusieurs des revendications 1 à 15, en tant que matériau d'emballage pour produit humide.

29. Utilisation de la structure selon une ou plusieurs des revendications 1 à 15, en tant que filtre à aspiration pour liquides polaires et/ou non polaires.

FIG. 1a

FIG. 1b

FIG.2

EP 0 642 907 B2

FIG. 3

Offenzellig

PS+Talkum+
Fremdpolymer

PS+Talkum

Geschlossenzellig

normaler
Temperaturbereich
für PS – Schaum –
herstellung

130    140    150    160    170 [°C]

FIG.4

EVA ... LDPE ... LLDPE ... HDPE ... PS ... PPC ... PP ... PETP

100 110 120 130 140 150 160 170 180 190 200 210 220 230 240 250 260 [°C]

▓▓▓ =geschlossenzelliger thermoplastischer Schaum

▭ =offenzelliger thermoplastischer Schaum

EP 0 642 907 B2

PS – Matrix     PP – Partikel

FIG.5a

PP

FIG.5b

FIG.6a

Ölsubstanz          Schaumoberfläche

PS-Zellwand

FIG.6b

Wasser

FIG.6c

Ölsubstanz

FIG.6d

Wasser

PS-Zellwand

Benetzungsmittel

FIG.6e

Ölsubstanz

Wasser

FIG.6f

Ölsubstanz

PS-Zellwand

Wasser

Benetzungsmittel

EP 0 642 907 B2